# EUROPEAN PATENT SPECIFICATION

(11) **EP 0 544 052 B1**
(45) Date of publication and mention of the grant of the patent: **04.09.1996**
(21) Application number: 92109055.1
(22) Date of filing: 29.05.1992
(51) Int. Cl.: C09J 4/06, C08F 299/00, B32B 7/00

(54) **Use of a photocurable resin composition for the preparation of a laminated film.**
Verwendung einer Photohärtbaren Harzzusammensetzung zur Herstellung einer laminierten Folie.
Application d'une compositon de résine photoréticulable pour préparer un film laminé

(30) Priority: 27.11.1991 JP 355475/91
(43) Date of publication of application: 02.06.1993
(73) Proprietor: DAICEL-UCB CO., LTD., Tokyo (JP)
(72) Inventor: Kishimoto, Yoshinori, Ohtake-shi, Hiroshima (JP)
(74) Representative: Hansen, Bernd, Dr. Dipl.-Chem.

(56) References cited:
- FR-A- 2 311 077
- WORLD PATENTS INDEX LATEST Week 9126, Derwent Publications Ltd., London, GB; AN 91-190133
- PATENT ABSTRACTS OF JAPAN vol. 11, no. 361 (C-459)(2808) 25 November 1987 ( MITSUBISHI RAYON CO. LTD. ) 13 June 1987

## Description

The present invention relates to the use of photocurable resin compositions in a laminated film for food packaging.

Plastics are widely used utilizing their flexibility and processability. To improve hardness and sratch resistance of the surface a coating of radiation curable resin compositions can be used. When radiation curable resin compositions are used, the resins comprise a main component which contains one or more acrylic or methacrylic groups in the molecule, such as urethane (meth)acrylates, epoxy (meth)acrylates, polyester (meth)acrylates, etc. or a mixture of more than one of the components. Although additives to the main resin components such as pigments and dyes may arbitrarily be added to the extent that would not inhibit photocuring, another essential component is a photoinitiator. So far, compounds of low molecular weight which have radical generating function have been used as a photoinitiators.

The examples are as follows: 2,2-dimthoxy-2-phenylacetophenone, acetophenone, benzophenone, xanthone, fluorenone, benzaldehyde, anthraquinone, triphenylamine, 3-methylacetophenone, 4-chlorobenzophenone, 4,4'-dimethoxy-benzophenone, N,N,N',N'-tetramethyl-4,4'-diaminobenzophenone, benzoinpropylether, benzyl dimethyl ketal, 1-(4-isopropoylphenyl)-2-hydroxy-2-methylpropane-1-one, 2-hydroxy-2-methyl-1-phenylpropane-1-one and thioxanthone derivatives.

Photoinitiators shown above which are used with photocurable resins are compounds of low molecular weigh without exception. When photocuring resin compositions containing such low molecular weight photoinitiators are used as laminating adhesives in food packaging films,there is a danger that the low molecular weight photoinitiators bleed out, which is a transfer of the photoinitiator to the surface of the laminated films when they are stored for a long time. Accordingly, strict regulations are generally applied to food packaging and laminating films. For instance, FDA has a well-known specification, which specifies extractable as 50 ppb or less.

JP-A-62 131 075 discloses radiation curable coating compositions containing a halogenated polyacrylate together with, for example, a polyol polyacrylate. These compositions are used as ray-curable paints.

JP-A-3 118 191 describes an image receiving sheet for thermal transfer recordings comprising a composition consisting of chlorinated polyesters and an ionizing radiation curable compound.

FR-A-2 311 077 discloses a laminating adhesive for food packaging films comprising:
(a) 20-70% by weight of a halogenated polymer having the following characteristics: (1) the carbon chain is interrupted by an oxygen or nitrogen atom, (2) the polymer contains 4-70% by weight halogen atoms being attached to carbon atoms having an sp²-configuration, (3) the average number molecular weight is between 700 and 10,000, (4) the glass transition temperature is between -80°C and 20°C,
(b) 5-30% by weight of an organic monomer compound having at least two radicals of acrylic acid and/or methacrylic acid and containing 0-65% halogen atoms being attached to carbon atoms having an sp²-configuration,
(c) 20-70% by weight of an organic monomer compound having an acrylic acid radical and/or methacrylic acid radical and containing 0-65% halogen atoms being attached to carbon atoms having an sp²-configuration,
(d) between 1 and 25% by weight of a photoinitiator comprising:
   (1) 0,5-100% by weight of at least one aromatic ketone,
   (2) 0-99,5% by weight of at least one tertiary amine,
   (3) 0-90% by weight of an aromatic or non-aromatic alpha-dione.

Thus, this prior art is directed to a photopolymerizable composition which contains a photo initiator.

An object of the present invention is, in order to solve the problem described herein above, to provide a photocurable resin composition which contains a halogenated polyester resin and/or a halogenated polyester (meth)acrylate resin as essential components, and does not contain initiators of low molecular weight explained above.

The present invention comprises the use of a photocurable resin composition comprising as essential components:
(a) at least one of a halogenated polyester resin and a halogenated polyester (meth)acrylate resin in an amount of 5 to 80 wt%,
(b) at least one of a (meth)acrylate monomer and a (meth)acrylate oligomer except the halogenated polyester (meth)acrylate resin in an amount of 20 to 95 wt%,
and not comprising any low molecular weight photopolymerization initiators, as laminating adhesive layer in a laminated food packaging film.

The unit "wt%" as used herein means "percentage by weight based on the total amount of components (a) and (b)".

The subject matter of the present invention is to use a halogen atom-containing-polymer alone as a photoinitiator and not to use a photoinitiator of low molecular weight in a photocurable composition in a laminated film as laminating adhesive layer so that the photoinitiator should not migrate to contacting food and also so-called bleeding should not occur.

In the present invention, halogen atom-containing-polymers which can be used as a photoinitiator are halogenated polyesters and/or halogenated polyester (meth)acrylates. In particular, halogenated polyesters in which halogen atoms are directly linked to benzene ring or to alicyclic structural unit are preferable.

These halogenated polyesters may be produced as follows:

Namely, they can be synthesized by known methods of preparing a polyester, e.g., a method described in U.S. Patent 3,952,032, using at least one of either a halogenated polyvalent carboxylic acid/anhydride and a halogenated polyvalent alcohol. Also, unhalogenated components may be copolymerized in the synthesis.

Examples of the halogenated polyvalent carboxylic acid/anhydride include 1,4,5,6,7,7-hexachlorobicyclo[2,2,1]hepto-5-ene-2,3-dicarboxylic acid, 1,4,5,6,7,7-hexachloro-bicyclo[2,2,1]hepto-5-ene-2-carboxylic acid, 4,4'-[2,3,5,6,2',3',5',6'-octobromo-1,1'-di(3-carboxypropoxy)]biphenyl, 2,4,6-trichlorophenoxy-acetic acid, 4-(pentabromophenoxy)-butyric acid, 2,2-bis-[3,5-dichloro-4-(2-carboxyethoxy)phenyl]propane, 1,4,5,6,7,7-hexachlorobicycloro[2,2,1]hepto-5-ene-2-acetic acid, 1,4,5,6,7,7-hexachloro-bicyclo[2,2,1]hepto-5-ene-2-pelargonic acid, 1,4,5,6,7,7-hexachloro-bicyclo[2,2,1]hepto-5-ene-2-acrylic acid, 1,4,5,6,7,7-hexachloro-bicyclo[2,2,1]hepto-5-ene-3-methyl-2-carboxylic acid, 3,5-dibromosalicylic acid or anhydride thereof, tetrachloro phthalic acid or anhydride thereof, tetrabromophthalic acid or anhydride thereof, and dichloromaleic acid or anhydride thereof.

Examples of the unchlorinated carboxylic acid or anhydride thereof to be used in combination include monocarboxylic acids such as acetic acid, propionic acid, butyric acid, vinylacetic acid, acrylic acid, methacrylic acid, benzoic acid and phenoxyacetic acid, dicarboxylic acids such as glutaric acid, succinic acid, adipic acid, sebacic acid, fumaric acid, maleic acid, citraconic acid, itaconic acid, phthalic acid, isophthalic acid, terephthalic acid and tetrahydrophthalic acid, tricarboxylic acids such as trimellitic acid, and tetracarboxylic acids such as pyromellitic acid.

Examples of the chlorinated polyvalent alcohol include 4,4'-[2,3,5,6,2',3',5',6'-octachloro-1,1'-di(2-(2-hydroxyethoxy)-ethoxy)]biphenyl or 4,4'-[2,3,5,6,2',3',5',6'-octabromo-1,1-di(2-(2-hydroxyethoxy)-ethoxy)]biphenyl, 2-(4-chlorophenoxy)-ethane-l-ol, 4-(2,4,6-trichlorophenoxy)-buthane-1-ol, 3-(pentachlorophenoxy)-propane-1-ol, 3-(pentachlorophenoxy)-propane-1,2-diol, 4,4'-[2,3,5,6,2',3',5',6'-octachloro-1, 1-di(2-(2-hydroxyethoxy)-ethoxy)]biphenyl, 4,4'-[2,3,5,6,2',3',5',6'-octachloro-1,1-di(2-(2-hydroxyethylamino)]biphenyl, 2,2'-bis[3,5-dichloro-4-(2-hydroxyethoxy)phenyl-propane, 2,2'-bis[3,5-dibromo-4-(2-dihdroxypropoxy)-phenyl]-propane, and 1,4-bis-(2-dihydroxypropoxy)-2,3,5,6-tetrachlorobenzene.

Examples of the unchlorinated alcohol to be used in combination include monovalent alcohols such as methanol, ethanol, n-propanol, isopropanol, n-buthanol, isobuthanol, 2-ethylhexanol, benzylalcohol, allylalcohol and diallyl ether of trimethylolpropane, divalent alcohols such as ethylene glycol, propylene glycol, 1,4-buthanediol, 1,6-hexanediol, neopentyl glycol, hydrogenated bisphenol A and tricyclodecanedimethanol, trivalent alcohols such as glycerol, trimethylolethane and trimethylolpropane, tetravalent alcohols such as pentaerythritol, and penta- or hexa-valent alcohols such as dipentaerythritol and sorbitol.

The chlorinated polyester(meth)acrylate can be obtained by preparing the above-described chlorinated polyester and then binding acrylic acid or methacrylic acid to a hydroxy group on the terminal of the chlorinated polyester by esterification.

Preferred examples of component (a) include halogenated polyesters prepared by polymerizing tetrachlorophthalic acid anhydride, other dibasic acids and ethyleneglycol.

The average degree of polymerization of component (a) to be used in the present invention is generally from several hundreds to about ten thousand, preferably from several hundreds to several thousands.

The essential resin components (b) in the photocurable resin compositions include urethane (meth)acrylates, epoxy (meth)acrylates or polyester (meth)acrylates, which have two or more of an acrylic group or a methacrylic group, and monomers and oligomers containing (meth)acryloyloxy groups. Examples of monomers and oligomers containing (meth)acryloyloxy groups include polyether(meth)acrylates, polyol(meth)acrylates, polyester(meth)acrylates, amidourethane(meth)acrylates, epoxy(meth)acrylates, urethane(meth)acrylates, spiroacetal(meth)acrylates, and polybuthadiene(meth)acrylates.

Examples thereof include polyether(meth)acrylate prepared from trimethylolpropane/propyleneoxide/acrylic acid and 1,2,6-hexanetriol/propyleneoxide/acrylic acid, and polyester(meth)acrylate prepared from succinic acid/trimethylolethane/acrylic acid and adipinic acid/1,6-hexanediol/acrylic acid.

Furthermore, examples thereof include (meth)acrylates or polyol(meth)acrylates such as triethyleneglycol diacrylate, neopentylglycol diarylate, 1,4-buthanediol dimethacrylate, hexapropyleneglycol diacrylate, trimethylolpropane triacrylate, 2-ethylhexyl acrylate, tetrahydrofurfuryl acrylate, 2-hydroxyethyl metahcrylate, ethylcarbitol acrylate, pentaerythritol tetracrylate, dipentaerythritol tetracrylate, dipentaerythritol pentacrylate and 2,2-bis(4-acryloyloxydiethoxyphenyl)propane, 2,2-bis(4-acryloyloxypropoxyphenyl)propane, and epoxy(meth)acrylates such as diglycidyl-etherified bisphenol A/acrylic acid, diglycidyl-etherified polybisphenol A/acrylic acid and triglycidyl-etherified glycerin/acrylic acid.

Furthermore, examples thereof include amidourethane(meth)acrylates such as γ-butyrolactone/N-methylethanolamine/bis(4-isocyanatocyclohexyl)methane/2-hydroxyethylacrylate, γ-butyrolactone/N-methylethanolamine/2,6-toluenediisocyanate/tetraethyleneglycol/2-hydroxyethylacrylate, urethaneacrylates such as 2,8-toluenediisocyanate diacrylate and isophoronediisocyanate diacrylate, spiroacetal acrylates prepared from diallylidene pentaerythritol/2-hydroxyethyl acrylate, and acryl-modified polybutadiene prepared from epoxy-modified butadiene/2-hydroxyethyl acrylate.

These may be used as sole as well as blended components.

Examples which are fast curable products and especially preferred crosslinking agents when UV is used as radiation in air include dipentaerythritol tetraacrylate, dipentaerythritol pentaacrylate, dipentaerythritol hexaacrylate, tripentaerythritol pentaacrylate, tripentaerythritol hexaacrylate, tripentaerythritol heptaacrylate, 2,2-bis(4-acryloyloxydiethoxyphenyl)propane, 2,2-bis(4-acryloyloxytriethoxyphenylpropane, and 2,2-bis(4-acryloyloxydipropoxyphenyl)propane.

The amount of component (a) is from 5 to 80 wt%, preferably from 5 to 30 wt%, based on the solid components, i.e., the total amount of components (a) and (b). Amount less than 5 wt% is not preferable for imcomplete cure. Conversely, amount of more than 80 wt% may not increase the curing speed. The photocurable compositions in the present invention may contain organic solvents that are inert to the resins. Incorporation of organic solvents may contribute to easy coating through viscosity reduction. Solvents should preferably be volatile so that residual solvents would not be left in the adhesive layer of the final products.

The amount of component (b) to be used in the present invention is from 20 to 95 wt%, preferably from 70 to 95 wt%, based on the total amount of components (a) and (b).

Furthermore, polymers and additives such as a coloring agent may be added to some extent so that properties of the composition are not adversely affected.

Now, details of the laminated films will be explained.

The laminated film comprises at least two sheets and between them the above-mentioned photocurable resin composition of the present invention as the adhesive layer, which does not contain harmful substances of low molecular weight. The laminated film in the present invention may contain pigments, dyes, stabilizers, etc. that have been approved in the specification of food additives.

Of the above-mentioned two sheets, at least one sheet must be transmitted to UV radiation.

Also, these sheets may be heat sealable. Namely, they may be polyvinyl chloride film, polyvinylidene chloride film, polypropylene film, polyethylene film, polyamide film, polyester film, polyvinyl acetate film, cellophane film coated with these materials on surface, etc. One sheet to be laminated to another sheet transmittable to UV radiation etc. may be made of various plastic films described above or an aluminum foil etc.

The laminated film of the present invention can be applied for a bag, which is made of at least one of various heat-sealable films. The photocurable resin composition is provided between two films facing each other on the edge portion of the bag and then cured with light to adhere the two films. Thus, the bag having the laminated structure of the present invention can be prepared.

The thickness of the laminating layer on films with the photocurable resin compositions in which no photoinitiators of low molecular weight are added should be generally from 1 to 30 µm. If the thickness is smaller than 1 µm, there is a possibility that adhesion may not be enough. If the thickness is larger than 30 µm, there is a possibility that the cure may not be enough.

The details of the present invention will be explained with examples and comparative example.

### EXAMPLE 1 (for the photocurable resin composition)

A photocurable resin composition was prepared by blending 50 parts by weight of polyester resin, 30 parts by weight of 1,6-hexanediol diacrylate, 20 parts by weight of chlorinated polyester resin and 100 parts by weight of ethyl acetate, the polyester resin being obtained by condensation reaction of 4 mole of ethylene glycol, 3 mole of phthalic anhydride and 3 mole of adipic acid, the chlorinated polyester resin being synthesized from 10 mole of ethyleneglycol, 1 mole of phthalic anhydride, 2 mole of adipic acid and 6 mole of tetrachlorphthalic anhydride.

### EXAMPLE 2 (for the photocurable resin composition)

Another photocurable resin composition was prepared by blending 70 parts by weight of a urethane acrylate, 20 parts by weight of a chlorinated polyester resin, 10 parts by weight of 1,6-hexanediol diacrylate and 100 parts by weight of ethyl acetate, the urethane acrylate being obtained by reacting 1 mole of a urethane prepolymer with 2 mole of 2-hydroxyethyl acrylate, the urethane prepolymer being synthesized from 3 mole of polyester polyol and 4 mole of toluenediisocyanate, the polyester polyol being obtained by condensation reaction of 7 mole of neopentyl glycol, 2 mole of ethylene glycol, 4 mole of sebasic acid, 4 mole of isophthalic acid.

### COMPARATIVE EXAMPLE 1 (for a photocurable resin composition)

A photocurable resin composition was prepared by blending 10 parts by weight of 1,6-hexanediol diacrylate, 70 parts by weight of the urethane acrylate used in Example 2 and 80 parts by weight of ethyl acetate.

Solid concentrations (concentration of solid components) of in the compositions prepared in the Examples and the Comparative Example were the same.

### Preparation of laminated films

Each composition prepared above was coated on clear CPP* film with a #6 bar coater (JIS K 5400, 1990). The coated film was placed in an oven of 60 °C for 3 min to remove ethyl acetate, thereby to provide the coated layer having a thickness of 3 µm. The coated surface of the CPP film prepared above was bonded with clear OPP* film so that air bubbles are not incorporated into the interface between the two films, thereby obtaining a CPP/OPP laminated film.
CPP*= cast polypropylene film
OPP*= oriented polypropylene film

### Curing condition

The laminated film was cured by irradiating with UV light from the OPP side at a distance of 10 cm from a high pressure mercury lamp of 120 W/cm with curing speed of 10 m/min.

### Adhesion Measurement---Type T peel-off test with Tension

| | |
|---|---|
| Pulling speed: | 200 mm/min. |
| Measuring temperature: | 20°C |
| Time of measurement: | 2 days after sample preparation. |

### Results: Adhesion Strength

| | |
|---|---|
| laminated film with the photocurable resin composition in Example 1: | 35 g/15 mm |
| Laminated film with the photocurable resin composition in Example 2: | 15 g/15 mm |

The sample coated with the composition of Comparative Example 1 could not be cured at all, therefore the measurement was not possible.

Photocurable resin compositions without photoinitiators of low molecular weight and laminated films that have cured layers from the compositions as adhesive layers may be obtained.

## Claims

1. Use of a photocurable resin composition comprising as essential components:
(a) at least one of a halogenated polyester resin and a halogenated polyester (meth)acrylate resin in an amount of 5 to 80 wt%,
(b) at least one of a (meth)acrylate monomer and a (meth)acrylate oligomer except the halogenated polyester (meth)acrylate resin in an amount of 20 to 95 wt%,
and not comprising any low molecular weight photopolymerization initiators, as laminating adhesive layer in a laminated food packaging film.

2. The use according to claim 1, wherein said component (a) is a chlorinated polyester resin.

3. The use according to claim 1, wherein said component (a) is a chlorinated polyester(meth)acrylate.

## Patentansprüche

1. Verwendung einer fotohärtbaren Harzzusammensetzung, umfassend als wesentliche Komponenten:
(a) wenigstens ein Harz, ausgewählt aus einem halogenierten Polyesterharz und einem halogenierten Polyester(meth)acrylatharz in einer Menge von 5 bis 80 Gew.%,
(b) wenigstens eine Verbindung, ausgewählt aus einem (Meth)acrylatmonomer und einem (Meth)acrylatoligomer, ausgenommen das halogenierte Polyester(meth)acrylatharz, in einer Menge von 20 bis 95 Gew.%,
und nicht umfassend irgendeinen niedrig-molekulargewichtigen Fotopolymerisation-Initiator, als laminierende Klebeschicht in einem laminierten Nahrungsmittel-Verpackungsfilm.

2. Verwendung gemäß Anspruch 1, bei welcher die Komponente (a) ein chloriertes Polyesterharz ist.

3. Verwendung gemäß Anspruch 1, bei welcher die Komponente (a) ein chloriertes Polyester(meth)acrylat ist.

## Revendications

1. Utilisation d'une composition de résine photoréticulable comprenant comme constituants essentiels :
(a) au moins une résine parmi une résine de polyester halogéné et une résine de polyester(méth)acrylate halogéné en une quantité de 5 à 80 % en masse,
(b) au moins un composé parmi un monomère de (méth)acrylate et un oligomère de (méth)acrylate à l'exception de la résine de polyester(méth)acrylate halogéné en une quantité de 20 à 95 % en masse,
et ne comprenant aucun initiateur de photopolymérisation de faible masse moléculaire, en tant que couche adhésive de stratification dans un film stratifié de conditionnement d'aliments.

2. Utilisation selon la revendication 1, dans laquelle ledit constituant (a) est une résine de polyester chloré.

3. Utilisation selon la revendication 1, dans laquelle ledit constituant (a) est un polyester(méth)acrylate chloré.
